# EUROPEAN PATENT SPECIFICATION

(11) **EP 1 304 205 B1**
(45) Date of publication and mention of the grant of the patent: **31.08.2005**
(21) Application number: 02022229.5
(22) Date of filing: 02.10.2002
(51) Int. Cl.: B29C 45/14, F16L 31/02, A61H 33/00

(54) **Method of forming a joint between a coupling sleeve and one or more pipes for distribution of a fluid**
Verfahren zum Herstellen einer Verbindung zwischen einer Kupplungsmuffe und einem oder mehreren Röhren zur Flüssigkeitsverteilung
Procédé pour réaliser un joint entre un manchon d'accouplement et d'un ou plusieurs tubes pour la distibution d'un fluide

(30) Priority: 12.10.2001 IT MI20012112
(43) Date of publication of application: 23.04.2003
(73) Proprietor: Wildschut, Rudolph Leonhard, Monte Carlo (MC)
(72) Inventor: Wildschut, Rudolph Leonhard, Monte Carlo (MC)
(74) Representative: Petruzzelli, Antonio

(56) References cited:
- GB-A- 2 147 523
- US-A- 4 457 542
- US-A- 5 033 775
- US-A- 5 302 336
- US-A- 5 356 587
- US-A- 5 568 949
- US-A- 5 573 283

## Description

The present invention relates to a method for the forming of a joint between a coupling sleeve with several ways and one or more pipes for distribution of a fluid, and is applied for the construction of hydraulic systems or more generically of systems for distribution of a fluid.

The present invention applies in particular also to the water and sanitary sector for the construction of the hydraulic system of a shower cubicle or of whirlpool baths.

It is known that the sealed coupling of a coupling sleeve to a pipe can be achieved by various methods, from simple gluing to mechanical clamping with clips if at least one of the two parts to be coupled is not rigid.

With reference to the sector of water and sanitary systems, and in particular whirlpool baths, by this system of joining the water recirculation system in the whirlpool bath is currently constructed, placed between the bath and the relative support frame, and comprising a recirculation pump, a delivery line slightly sloping downwards and formed by pipe sections in semi-rigid or rigid plastic pipes connected by T-shaped coupling sleeves in rigid plastic, and a suction line. In the delivery line the pipe section upstream of a T-shaped sleeve is connected to one of the coaxial ways of the T-shaped sleeve, the pipe section downstream of the T-shaped joint is connected to the remaining coaxial way of the T-shaped sleeve, and the orthogonal way of the T-shaped sleeve is connected to a spout for supplying water to the bath. The last sleeve of the delivery line is an elbow which connects the last pipe section of the delivery line to the last spout for supplying water to the whirlpool bath. Naturally mechanical clamping by means of clips is only possible if the pipe sections are in semi-rigid plastic.

Again in the sector of water and sanitary systems, and in particular of whirlpool baths, supply spouts are known which are directly equipped with a T-shaped or Y-shaped coupling sleeve whereto pipe sections of the water and sanitary system can be joined by mechanical clamping. In this case the supply spouts are, intrinsically, extremely expensive.

US-A-5573283 is known from prior art: it describes a T-connector comprising two opposite ends and a branch end extending outwardly therefrom intermediate said opposite ends: those ends are inserted inside hose section ends which are maintained in the position by annular ridges. A sleeve-like member injection is moulded from a polymeric material over said ends of said hose sections. Said patent also describes a method to obtain this branched hose construction.

Also US-A-5033775 describes a process of manufacture of and the article which comprises a connecting and/or branching of flexible hoses which is characterised in that an outer covering element provides a compressive action on the walls of the ends of the flexible hoses onto a rigid inner pipe. The outer covering element may comprise a polymer of which the contraction during cooling of the polymer is at least equal to 1 % of its original diameter.

Furthermore, GB-2147523A describes a hydrotherapy nozzle comprising a main body and a jet outlet, the main body having a chamber therein in which the water and air is mixed, the chamber having inlet and outlet orifices for the water, and said nozzles are connected together with flexible hose strained to take an upwardly curved route.

In other technological sectors such as that of machines for washing, the technique of over-moulding the sleeve of the drain hose of the washing machine on the head of the drain pipe is known. For the over-moulding a metal core acting as male of the mould of the sleeve is pressure-inserted in the head of the pipe, while the female of the mould of the sleeve is closed on the male of the mould of the sleeve for injection of the material to be moulded. At the end of moulding of the sleeve the female of the mould is opened and the male of the mould is removed from the pipe.

This method of over-moulding ensures perfect tightness of the coupling between the sleeve and the pipe but suffers from numerous disadvantages due mainly to the difficulty of extraction of the male of the mould from the pipe given the high friction present between the male of the mould and the pipe and necessary for correct moulding of the sleeve.

This method of over-moulding can in fact only be used if only two parts have to be coupled, that is to say the sleeve to one pipe, for this purpose a brief penetration of the male of the mould in the head of the pipe is sufficient, which does not complicate extraction of the male of the mould from the pipe at the end of moulding.

However this method of over-moulding cannot be used in the case wherein it is necessary to couple at least two ways of a sleeve with several ways to corresponding pipe sections, as the male of the mould should be inserted in the entire length of one of the pipes so as to prevent extraction of the male of the mould at the end of moulding.

Another disadvantage of the method of over-moulding described above lies in the fact that, if the sleeve is curved, extraction of the male of the mould must be carried out by hand unless a mould with rotating male, suitable for extraction from the pipe after moulding, is available, which mould however is decidedly expensive.

In all the cases wherein the technique of over-moulding cannot be utilised use has to be made once again of the more traditional techniques of coupling by gluing or if possible by clamping clips.

The object of the present invention is therefore that of providing a method of joining by over-moulding of a sleeve coupling to one or more pipes for distribution of a fluid which overcomes all the disadvantages suffered by the prior art.

This object is achieved by a method for forming a joint between a coupling sleeve, of the type with two or more tubular connection ways for pipes for distribution of a fluid, and one or more pipes for distribution of a fluid, in accordance with claim 1 below.

The tubular core of the coupling sleeve remains incorporated in the body of the over-moulded sleeve and thus acts as the extractable mould male used in the current over-moulding method for forming the joint between a sleeve and a pipe.

Such an over-moulding method can therefore be advantageously generalised for forming a joint between a coupling sleeve with n ways and a number of pipes between 1 and n.

This over-moulding method totally eliminates the need to perform gluing or mechanical clamping between the parts to be joined and enables pre-assembly of a single-part line before final installation, achieving a financial saving relating to the lower cost of the checks and tests on the line prior to final installation and to the lower labour cost for installation of the line.

The core of the coupling sleeve improves the solidity of the joint between the coupling sleeve and each of the pipes connected thereto, given that the head of each pipe is now firmly restrained between the core of the coupling sleeve and the body of the over-moulded sleeve.

Watertightness of the joint is clearly even better if the core of the coupling sleeve is made in a rigid material. In this latter case, advantageously, the core of the coupling sleeve can also serve to balance the stress which originates on the coupling sleeve if the pipe (or pipes) whereto it is joined is loaded.

Such a joining method can be applied for joining rigid and flexible pipes, and this latter possibility becomes extremely advantageous when the pipes of the line have to connect elements with a variable centre distance, as may be the case, by way of an example, for the construction of several recirculation lines of whirlpool baths wherein, according to the type of bath, the centre distance between the water supply spouts may vary.

These and other advantages will be made clearer from the following description of a preferred embodiment of the invention, to be read by way of a non-limiting example of the more general concept claimed.

The present invention refers to the accompanying drawings in which:
Figure 1 illustrates a sectioned plan view of a joint between a Y-shaped coupling sleeve and two pipe sections;
Figure 2 illustrates a sectioned plan view of a joint between a Y-shaped coupling sleeve and a single pipe section wherein one way of the coupling sleeve is sealed;
Figure 3 illustrates a sectioned plan view of a joint between a T-shaped coupling sleeve and two pipe sections;
Figure 4 is a sectioned plan view of the method used for over-moulding of the body of the sleeve in the joint of Figure 1;
Figure 5 is a plan view of a preferred embodiment of a double single-part delivery line of a hydraulic system for recirculation of water of a whirlpool bath;
Figure 6 is a plan view of a preferred embodiment of a single single-part delivery line of a hydraulic system for recirculation of water of a whirlpool bath; and
Figure 7 is a lateral elevation view of a whirlpool bath with a double delivery line in accordance with the embodiment of Figure 5.

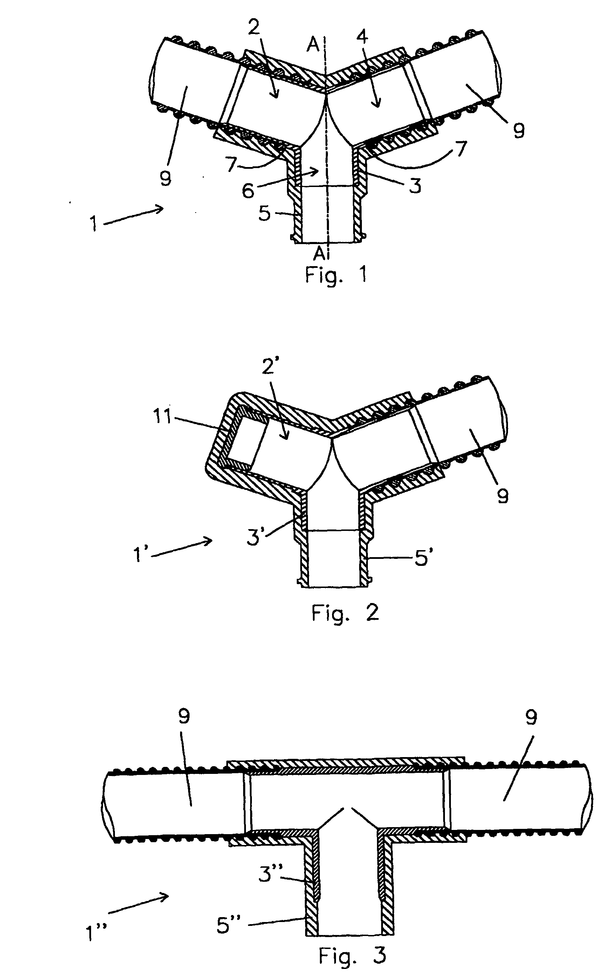

With reference to Figure 1, a Y-shaped coupling sleeve is illustrated, denoted overall by reference numeral 1, having an axis of symmetry A-A and consisting of a tubular core 3 of the coupling sleeve and a body of the sleeve 5 over-moulded on the core 3.

If we assume that the flow of the fluid through the joint 1 is that indicated by the arrows in Figure 1, the joint 1 comprises a single tubular inlet way 2 connected to a first spiralled feed pipe 9, a first tubular outlet way 4 formed by the way of the joint 1 axially symmetrical to the inlet way 2 and connected to a second spiralled feed pipe 9, and a second axial tubular outlet way 6. The three ways, 2, 4 and 6 of the joint 1 are naturally in fluid communication one with the other.

The external wall of the head of the axially symmetrical tubular ways of the tubular core 3 of the joint 1 describes a perimeter housing vent 7 for the head of the corresponding pipe sections 9 which are therefore restrained between the core 3 of the sleeve 1 and the over-moulded body 5 of the sleeve 1.

The core 3 of the sleeve 1 can be in a plastic material and preferably in rigid PVC (polyvinyl chloride), while the over-moulded body 5 of the sleeve 1 is preferably in semi-rigid or soft PVC or in rubber.

Referring now in particular to Figure 2, the details similar to those of Figure 1 are illustrated with the same reference numeral followed by an inverted comma. The Y-shaped coupling sleeve 1' differs substantially from the sleeve 1 of Figure 1 due to the fact that a relative plug 11 is attached to the tubular way of the core 3' coaxial to the way 2' of the sleeve 1', for closure, and due to the fact that the body 5' of the over-moulded sleeve 1' covers entirely and seals the plug 11.

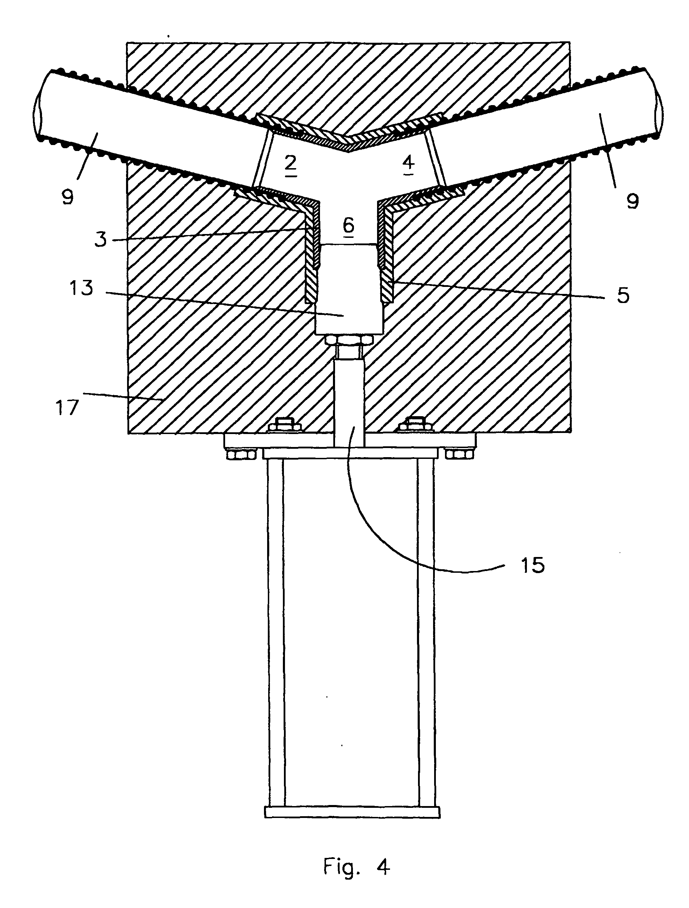

Referring now in particular to Figure 3, the details similar to those of Figure 1 are illustrated with the same reference numeral followed by a double inverted comma. The coupling sleeve 1" differs from the sleeve 1 of Figure 1 solely due to its T shape instead of a Y shape.

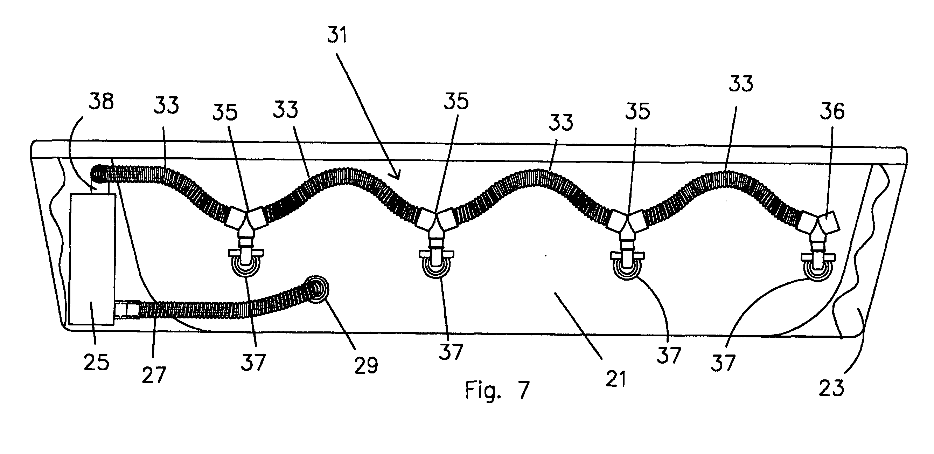

Referring now to Figure 4, the method of manufacture by moulding of the coupling between the joint 1 and a pipe 9 is the following.

The head of the spiralled pipe sections 9 is pre-assembled in the vent 7 of the head of the corresponding tubular way of the core 3 coaxial to the tubular way 2 of the joint 1. The core 3 and the pipe sections 9 pre-assembled in this way are placed in the female 17 of the open mould. A male 13 of the mould is pressure-inserted, actuated by a linear piston 15, in the head of the tubular way of the core 3 coaxial to the way 6 of the joint 1. The female 17 of the mould is closed on the core 3 of the joint 1 and injection moulding is carried out. At the end of moulding the female 17 of the mould is opened, the male of the mould is removed and the finished joint 1 is extracted from the female 17.

In order to mould the joint of Figure 2 however, the plug 11 is attached to the head of the tubular way of the core 3', coaxial to the tubular way 4' of the joint 1', before closure of the female 17 of the mould and an insert opposite the head of the plug 11 is inserted in the female 17 to form the portion of the body of the sleeve for covering the plug 11.

The female 17 of the mould has to be shaped in such a way as to create a zone of overlapping between the body 5 of the sleeve and the pipe 9, extending along a part or preferably along the whole section of engaging between the spiralled pipes 9 and the core 3 of the joint 1.

The method now illustrated can clearly be generalised for forming a joint between a coupling sleeve of whatsoever shape with several ways and one or more pipes or pipe sections. By the same method the joint of Figure 3 is achieved and joints can be formed, for example, between an X-shaped or cross-shaped coupling sleeve and up to four pipes or pipe sections, or again between an elbow coupling sleeve and one or two pipes or pipe sections.

Clearly for the formation of a joint between a generic coupling sleeve with several ways and one or more pipes the same number of males of the mould have to be provided as the number of ways of the joint which have to remain free, and the same number of plugs and relative inserts of the mould as the number of ways of the joint to be plugged.

It is extremely advantageous, particularly from the viewpoint of industrial productivity, the fact that, by the present method of forming of the joint between a coupling sleeve and one or more pipes, basing on a universal core of the coupling sleeve and a universal female of the mould, it is possible to obtain a series of coupling sleeves which stand out due to the number of ways simply by providing a plug and a relative insert of the mould for each way of the coupling sleeve which is to be plugged. For example, as emerges from the comparison between the joints illustrated in Figures 1 and 2, it is possible to change from a Y-shaped coupling sleeve (Figure 1) to an elbow coupling sleeve (Figure 2) without having to change the female of the mould or the core of the sleeve.

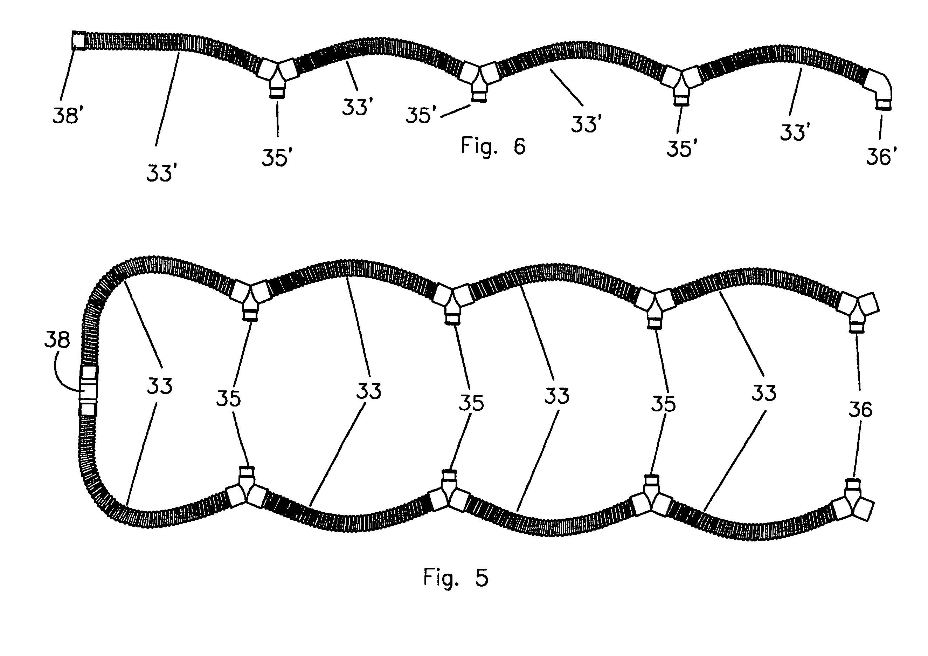

Figures 5 to 7 show how the method of joining disclosed by the present invention can be exploited for building a single-part delivery line of a hydraulic system for recirculation of the water of a whirlpool bath.

The hydraulic recirculation system of the whirlpool bath of Figure 7 is placed between the whirlpool bath 21 and the relative support frame 23, and comprises a recirculation pump 25 placed between the head of the whirlpool bath 21 and the relative frame 23, a suction line composed of a pipe 27 which connects a spout 29 for suction of water from the bath 21 to the inlet of the recirculation pump 25, and a delivery line shown in Figure 5 formed by two branches 31 formed from the outlet of the recirculation pump 25 which develop along the opposite longitudinal sides of the whirlpool bath 21.

Each branch 31 of the delivery line feeds an underlying and corresponding row of supply spouts 37 of the whirlpool bath 21, and each row of supply spouts 37 is in turn connected to a corresponding pneumatic line to perform mixing with air of the water made to recirculate in the whirlpool bath 21.

Each branch 31 of the delivery line comprises pipe sections 33 connected in series via Y-shaped coupling sleeves 35 such as the one illustrated in Figure 1. The last sleeve of each branch 31 is an elbow 36 such as the one illustrated in Figure 2 which connects the head of the last pipe section 33 of the branch 31 to the last supply spout 37 of the row.

Each Y-shaped coupling sleeve 35 receives the flow of recirculation water via its way placed upstream in relation to the direction of development of the delivery line, feeds part of the flow of recirculation water to the corresponding underlying supply spout 37 via its way orthogonal to the direction of development of the delivery line, and distributes the remaining part of flow of recirculation water to the next pipe section 33 via the way located downstream in relation to the direction of development of the delivery line so as to continue feeding of recirculation water towards the next supply spouts 37 of the delivery line.

At the head of the delivery line a Y-shaped coupling sleeve 38 is provided, like the one of Figure 1, joined to the first pipe section 33 of each of the two branches 31 of the delivery line and to the recirculation pump 25.

The delivery line, comprising the pipe sections 33 of the two branches of the delivery line, the coupling sleeves 25 of the two branches of the delivery line, the Y-shaped coupling sleeve 38 for connection of the delivery line to the outlet of the recirculation pump 25, and the end elbows 36 of the two branches of the delivery line, is assembled in a single part in accordance with the over-moulding method described above. The delivery line is therefore formed by a head joint and by intermediate couplings identical to those illustrated in Figure 1 and by a pair of end joints of the two branches of the delivery line identical to that illustrated in Figure 2.

The installation of the hydraulic recirculation system of the whirlpool bath 21 consists of forming the connection between the coupling sleeves 35 and 36 and the relative supply spouts 37, and between the coupling sleeve 38 and the outlet of the pump 25.

The coupling sleeves 35, 36 and 38 have a core in rigid PVC and an over-moulded body in semi-rigid or soft PVC, while the pipe sections 33 are flexible and slightly curved with the concave part turned upwards.

There are many advantages of the hydraulic system for whirlpool baths shown in Figure 4 compared to traditional hydraulic systems for whirlpool baths.

The possibility of using Y-shaped coupling sleeves and flexible pipe sections, curved with the concave part downwards, allows perfect drainage of the recirculation water from the delivery line and therefore avoids the risk that the stagnation of water possibly contaminated by the washing detergents present in the whirlpool bath can cause unpleasant odours or release from the supply spouts of a first jet of malodorous water at each restart of the recirculation pump. In traditional hydraulic recirculation systems of whirlpool baths use is generally made instead of T-shaped coupling sleeves and virtually straight rigid or semi-rigid pipe sections which do not ensure always perfect drainage of water.

The same hydraulic recirculation system can be connected to rows of supply spouts of the bath with a different centre distance simply by modifying the radius of curvature of the flexible pipe sections which make up the suction and delivery lines. In traditional hydraulic recirculation systems of whirlpool baths however the pipe sections are generally rigid or semi-rigid and adapt to one single pre-defined centre distance between the supply spouts.

The provision of coupling sleeves having a semi-rigid or soft body enables the coupling sleeves of the delivery and suction lines to be joined to the relative supply spouts and the head coupling sleeve of the delivery line to the delivery section of the recirculation pump by means of mechanical clamping clips. In traditional hydraulic recirculation systems of whirlpool baths however the coupling sleeves are generally rigid and can only be connected by gluing to the corresponding supply spouts, also rigid, or outlet of the recirculation pump, but the gluing operations, as is known, have to be performed under a hood for extraction of the toxic fumes produced by evaporation of the glue.

After assembly of the single-part delivery line, the installation of the single-part delivery line requires a point of watertightness between each coupling sleeve and the relative supply spout and a single point of watertightness between the head coupling sleeve of the delivery line and the outlet of the recirculation pump. In traditional hydraulic recirculation systems of whirlpool baths however the installation of the double delivery line, once the two branches of the delivery line have been assembled separately, requires a point of watertightness between each coupling sleeve and the relative supply spout and as many as three points of watertightness for the connection between the head coupling sleeve of the double delivery line and the first pipe sections of the two branches of the delivery line on one side and the outlet of the recirculation pump on the other side.

Naturally the joining method disclosed by the present invention extends to the case of a hydraulic recirculation system of whirlpool baths different from that now described, for example formed by a single delivery line, such as the one shown in Figure 6 and composed of a series of spiralled pipe sections 33' joined by Y-shaped joints 35' of the type of Figure 1, an elbow head joint 38' for joining of the delivery line to the recirculation pump and an end elbow joint 36' for joining the end pipe section 33' to the supply spout of the bath further downstream. In this case too the head elbow and the end elbow of the delivery line, unlike what is illustrated in Figure 6, can optionally be of the type illustrated in Figure 2.

A hydraulic circuit assembled in accordance with the present invention can comprise smooth, spiralled, rigid or flexible pipes or pipe sections, straight or curved, joined by T-shaped, X-shaped, cross-shaped or otherwise shaped coupling sleeves.

The material making up the body and/or core of the coupling sleeve can more generically be plastic or even metal, or another material.

The method of joining disclosed by the present invention can be applied for the pre-assembly alone of a part of the hydraulic system, to assemble later the remaining part of the hydraulic system, for example by assembling subsequently the end and head coupling sleeves of the delivery and/or suction line of the hydraulic system by traditional techniques.

Finally the joining technique described now in relation to the hydraulic recirculation system of whirlpool baths can be applied also for the construction of the hydraulic system of a shower cubicle and more generally of any fluid distribution system, for example for the distribution of air or steam in water and sanitary systems such as whirlpool baths, showers, saunas etc.

## Claims

1. Method for forming a joint between a coupling sleeve (1, 1', 1", 35, 35', 36, 36', 38, 38'), of the type with two or more tubular connection ways (2, 4, 6) for pipes for distribution of a fluid, and one or more pipes (9) for distribution of a fluid, **characterised in that** it comprises the following phases:
- provision of a tubular core (3) of the coupling sleeve (1);
- head engaging over an intersection length of each of said one or more externally corrugated pipes (9) on a corresponding tubular way (2, 4, 6) of the core (3) of the coupling sleeve (1); and
- over-moulding of a body (5) of the coupling sleeve (1) on the tubular core (3) of the coupling sleeve (1), said over-moulded body (5) of the coupling sleeve (1) being applied to externally cover completely or at least partially said length of intersection between each of said one or more externally corrugated pipes (9) and the corresponding tubular way of said core (3) of the coupling sleeve (1).

2. Method for forming a joint according to claim 1, **characterised in that** each of said one or more pipes (9) are fitted into an external perimeter vent (7) of the corresponding tubular way of the core (3) of the coupling sleeve (1).

3. Method for forming a joint between a coupling sleeve and one or more distribution pipes according to claim 1, **characterised in that** the body (5) of the over-moulded coupling sleeve (1) is made in a semi-rigid or soft PVC (polyvinyl chloride) material.

4. Method for forming a joint between a coupling sleeve and one or more distribution pipes according to claim 1, **characterised in that** the core (3) of the coupling sleeve (1) is made in rigid PVC (polyvinyl chloride) material.

5. Method for forming a joint between a coupling sleeve (1'), of the type with three or more tubular connection ways for pipes for distribution of a fluid, and one or more distribution pipes (9) according to claim 1, **characterised in that** prior to over-moulding of the body (5') of the coupling sleeve (1') a closure plug (11) is attached to at least one way of the core (3') of the coupling sleeve (1'), and **in that** the body (5') of the over-moulded coupling sleeve(1') covers and seals said plug (11).

6. A joint between a Y-shaped coupling sleeve (1) and two pipes for the distribution of a fluid, obtainable in accordance with the method described in claims from 1 to 5.

7. A joint according to claim 6, where the coupling sleeve is T-shaped.

8. A joint according to claim 6, where the coupling sleeve is straight.

9. A joint according to claim 6, where the coupling sleeve is elbow-shaped.

10. A joint according to claim 9, between an elbow-shaped sleeve and one pipe for the distribution of a fluid.

11. A water recirculation line of a whirlpool bath, comprising a plurality of pipes and coupling sleeves according to claims from 6 to 10, and realized according to claims from 1 to 5, **characterized in that** it is made in one single part.

## Patentansprüche

1. Ein Verfahren zum Herstellen einer Verbindung zwischen einer Kupplungsmuffe (1, 1', 1", 35, 35', 36, 36', 38, 38'), und zwar des Typs mit zwei oder mehreren röhrenförmigen Verbindungswegen (2, 4, 6) für Röhren zur Flüssigkeitsverteilung, und einer oder mehreren Röhren (9) zur Flüssigkeitsverteilung, **dadurch gekennzeichnet, dass** die folgende Phasen umfasst:
- die Bereitstellung eines röhrenförmigen Kerns (3) der Kupplungsmuffe (1);
- das Einrücken, über eine Überschneidungslänge, jeder der genannten eine oder mehreren, äußerlich gerippten Röhren (9) an einem entsprechenden röhrenförmigen Verbindungsweg (2, 4, 6) des Kerns (3) der Kupplungsmuffe (1), und
- Überpressen eines Körpers (5) der Kupplungsmuffe (1) am röhrenförmigen Kern (3) der Kupplungsmuffe (1), wobei der genannte überpresste Körper (5) der Kupplungsmuffe (1) angebracht wird, um ganz oder zumindest teilweise die genannte Überschneidungslänge zwischen jeder der genannten ein oder mehreren äußerlich gerippten Röhren (9) und dem entsprechenden röhrenförmigen Weg des genannten Kerns (3) der Kupplungsmuffe (1) abzudecken.

2. Ein Verfahren zum Herstellen einer Verbindung gemäß Anspruch 1, **dadurch gekennzeichnet, dass** jede der genannten ein oder mehreren Röhren (9) in einen äußeren Umfangs-Abluftstutzen (7) des entsprechenden röhrenförmigen Wegs des Kerns (3) der Kupplungsmuffe (1) eingepasst ist.

3. Ein Verfahren zum Herstellen einer Verbindung zwischen einer Kupplungsmuffe und einer oder mehreren Verteilungsröhren gemäß Anspruch 1, **dadurch gekennzeichnet, dass** der Körper (5) der überpressten Kupplungsmuffe (1) aus Halbhart- oder Weich-PVC (Polyvinylchlorid) hergestellt ist.

4. Ein Verfahren zum Herstellen einer Verbindung zwischen einer Kupplungsmuffe und einer oder mehreren Verteilungsröhren gemäß Anspruch 1, **dadurch gekennzeichnet, dass** der Kern (3) der Kupplungsmuffe (1) aus Hart- PVC (Polyvinylchlorid) hergestellt ist.

5. Ein Verfahren zum Herstellen einer Verbindung zwischen einer Kupplungsmuffe (1'), und zwar des Typs mit drei oder mehreren röhrenförmigen Verbindungswegen für Röhren zur Flüssigkeitsverteilung, und einer oder mehreren Verteilungsröhren (9) gemäß Anspruch 1, **dadurch gekennzeichnet, dass** vor der Überpressung des Körpers (5') der Kupplungsmuffe (1') ein Abschlussdeckel (11) an mindestens einem Weg des Kerns (3') der Kupplungsmuffe (1') befestigt ist, sowie **dadurch**, dass der Körper (5') der überpressten Kupplungsmuffe (1') diesen Abschlussdeckel (11) abdeckt und versiegelt.

6. Eine Verbindung zwischen einer Y-förmigen Kupplungsmuffe (1) und zwei Röhren zur Flüssigkeitsverteilung, die gemäß des jeweils in den Ansprüchen von 1 bis 5 beschriebenen Verfahrens erzielt werden kann.

7. Eine Verbindung gemäß Anspruch 6, wobei die Kupplungsmuffe eine T-Form aufweist.

8. Eine Verbindung gemäß Anspruch 6, wobei die Kupplungsmuffe gerade ist.

9. Eine Verbindung gemäß Anspruch 6, wobei die Kupplungsmuffe eine Knieform aufweist.

10. Eine Verbindung gemäß Anspruch 9 zwischen einer knieförmigen Muffe und einer Röhre zur Flüssigkeitsverteilung.

11. Eine Wasser- Rezirkulationsleitung einer Whirlpool-Wanne, die eine Vielzahl von Röhren und Kupplungsmuffen gemäß den Ansprüchen von 6 bis 10 umfasst, und die gemäß den Ansprüchen von 1 bis 5 hergestellt ist, **dadurch gekennzeichnet, dass** sie aus einem einzigen Teil besteht.

## Revendications

1. Procédé pour réaliser un joint entre un manchon d'accouplement (1, 1', 1", 35, 35', 36, 36', 38, 38'), du type avec deux ou plusieurs voies de connexion tubulaires (2, 4, 6) pour tubes pour la distribution d'un fluide, et un ou plusieurs tubes (9) pour la distribution d'un fluide, **caractérisé par le fait qu'**il comprend les phases suivantes :
- installation d'un noyau tubulaire (3) du manchon d'accouplement (1) ;
- engagement tête par-dessus une longueur d'intersection de chacun desdits un ou plusieurs tubes ondulés extérieurement (9) sur une voie tubulaire correspondante (2, 4, 6) du noyau (3) du manchon d'accouplement (1) ; et
- surmoulage d'un corps (5) du manchon d'accouplement (1) sur le noyau tubulaire (3) du manchon d'accouplement (1), ledit corps surmoulé (5) du manchon d'accouplement (1) étant appliqué pour couvrir extérieurement de manière complète ou au moins partielle ladite longueur d'intersection entre chacun desdits un ou plusieurs tubes ondulés extérieurement (9) et la correspondante voie tubulaire dudit noyau (3) du manchon d'accouplement (1).

2. Procédé pour réaliser un joint conformément à la revendication 1, **caractérisé par le fait que** chacun desdits un ou plusieurs tubes (9) sont logés dans un évent (7) du périmètre extérieur de la voie tubulaire correspondante du noyau (3) du manchon d'accouplement (1).

3. Procédé pour réaliser un joint entre un manchon d'accouplement et un ou plusieurs tubes de distribution conformément à la revendication 1, **caractérisé par le fait que** le corps (5) du manchon d'accouplement surmoulé (1) est fabriqué dans un matériau de PVC (chlorure de polyvinyle) semi-rigide ou souple.

4. Procédé pour réaliser un joint entre un manchon d'accouplement et un ou plusieurs tubes pour la distribution conformément à la revendication 1, **caractérisé par le fait que** le noyau (3) du manchon d'accouplement (1) est fabriqué en matériau PVC (chlorure de polyvinyle) rigide.

5. Procédé pour réaliser un joint entre un manchon d'accouplement (1') du type avec trois ou plusieurs voies de connexion tubulaires pour tubes pour la distribution d'un fluide, et un ou plusieurs tubes pour la distribution (9) conformément à la revendication 1, **caractérisé par le fait qu'**avant le surmoulage du corps (5') du manchon d'accouplement (1') un bouchon de fermeture (11) est fixé à au moins une voie du noyau (3') du manchon d'accouplement (1') et **par le fait que** le corps (5') du manchon d'accouplement surmoulé (1') couvre et scelle ledit bouchon (11).

6. Un joint entre un manchon d'accouplement en forme de Y (1) et deux tubes pour la distribution d'un fluide, réalisable conformément au procédé décrit dans les revendications de 1 à 5.

7. Un joint conformément à la revendication 6, dans lequel le manchon d'accouplement est en forme de T.

8. Un joint conformément à la revendication 6, dans lequel le manchon d'accouplement est droit.

9. Un joint conformément à la revendication 6, dans lequel le manchon d'accouplement est coudé.

10. Un joint conformément à la revendication 9 entre un manchon coudé et un tube pour la distribution d'un fluide.

11. Une ligne de recirculation de l'eau d'un bain à remous comprenant une pluralité de tubes et de manchons d'accouplement conformément aux revendications de 6 à 10 et réalisée conformément aux revendications de 1 à 5, **caractérisée par le fait qu'**elle est composée d'une partie unique.
